# EUROPEAN PATENT SPECIFICATION

(11) **EP 1 567 362 B1**
(45) Date of publication and mention of the grant of the patent: **27.10.2010**
(21) Application number: 03779967.3
(22) Date of filing: 18.11.2003
(51) Int. Cl.: B41M 5/00, C09D 17/00, C09C 1/30

(54) **DISPERSION, COATING SLIP AND ABSORPTIVE MEDIUM**
DISPERSION, STREICHMASSE UND ABSORBIERENDES MEDIUM
DISPERSION, SAUCE DE COUCHAGE ET MILIEU ABSORBANT

(30) Priority: 03.12.2002 DE 10256267
(43) Date of publication of application: 31.08.2005
(73) Proprietor: Evonik Degussa GmbH, 45128 Essen (DE)
(72) Inventor: BATZ-SOHN, Christoph, 63454 Hanau (DE); SCHARFE, Thomas, 74076 Heilbronn (DE); LORTZ, Wolfgang, 63607 Wächtersbach (DE)
(86) International application number: PCT/EP2003/012877
(87) International publication number: WO 2004/050377

(56) References cited:
- EP-A- 1 331 254
- EP-A- 1 346 841
- US-B1- 6 284 819

## Description

The invention provides an aqueous dispersion containing a silicon dioxide powder and another.metal oxide or non-metal' oxide powder. The invention also provides a coating slip deriving from this dispersion and an ink-absorptive medium.

Surfaces of absorptive supports can be coated with coating slips to improve their print properties. Of particular importance are for example the adsorption, drying times and adhesion of the ink as well as the gloss of the absorptive medium. Particularly for photograph-type materials gloss and high ink absorption capacity represent substantial features.

The coating slip for producing a glossy absorptive support generally comprises an aqueous dispersion of pigments, such as hydrated aluminium hydroxide, aluminium oxide, silicon dioxide (silica), titanium dioxide and a binder, such as e.g. polyvinyl alcohol, the pigments being incorporated in the form of powders or as a dispersion of powders.

High-gloss coatings can be obtained for example with fine silica particles. The often low stability and the high viscosity of the dispersions used for the coating slips are disadvantageous. Thus the dispersion often has to be produced immediately before its conversion into a coating slip. More highly filled dispersions are difficult to process because of the increased viscosity.

The filler content of the coating slip is an important parameter for the quality of the absorptive medium produced with it and for the economic efficiency of the process. If a coating slip has a high filler content less coating slip is needed to obtain a specific rate of application than is the case with coating slips having a low filler content. In addition, less water has to be evaporated in the case of a high filler content, which means that drying is faster. The process can therefore be performed more economically as compared with a coating slip having a low filler content.

A high gloss and a good ink absorption capacity can also be achieved by processing means if the coating slip is applied by cast coating. This process is relatively slow and cost-intensive, however.

In DE-A-100 35 054 cationised fine silica particles with la primary particle diameter of 50 nm or less are used in an aqueous dispersion to produce a coating slip that leads to an absorptive medium with high gloss and good ink absorption capacity.

US 6,284,819 describes a coating slip with a specific viscosity that is obtained from an aqueous dispersion of two particles differing in type and size. The first powder type comprises metal oxide particles such as e.g. silica, cationised silica or aluminium oxide. The first powder type comprises aggregates of smaller primary particles having an average primary particle size of less than 100 nm and an average aggregate size of 100 to 500 nm. In addition, the average aggregate diameter of the particles of the second powder type is at least half the size of the average aggregate diameter of the first powder type. The second powder type comprises metal oxides and synthetic polymers. The ratio by weight of the particles of the first to the second powder type is between 9 and 91 wt.%. An absorptive medium with high gloss and good ink absorption capacity can be produced with the coating slip thus defined. The first powder type of particles is intended to be responsible for the absorption of liquid. The smaller aggregates of the second powder type are intended to fill voids. Overall the packing density of the coating is increased. The substantial feature is that the average aggregate diameter of the particles of the second powder type is at least half the size of the average aggregate diameter of the first powder type. As is shown in the embodiment examples, the coating slip is obtained by adding a binder, such as e.g. polyvinyl alcohol, to a physical mixture of two aqueous dispersions, one dispersion containing the particles of the first'powder type, one dispersion containing the particles of the second powder type. All combinations of metal oxide particles, regardless of their specific surface charge, at a given pH of the dispersion are disclosed in US 6,284,819. This can lead to dispersions that are not stable, that rapidly tend to gel and that are therefore only of limited suitability for producing a coating slip.

The examples show that there is a high level of interest in coating slips and in absorptive media produced with them having high gloss, good ink absorption capacity and rapid drying times. Particular importance is given to the dispersions that serve as the starting material for the coating slips.

The object of the invention is therefore to provide a dispersion having a high filler content and low viscosity that allows a coating slip to be produced that, when applied to an absorptive support, produces an absorptive medium displaying high gloss, good ink absorption capacity and good drying performance.

The invention provides a stable, aqueous dispersion containing powders A and B,
- wherein powder A is an amorphous silicon dioxide powder having an average particle diameter of 0.05 to 0.7 µm and a BET surface area of 5 to 50 m²/g, and
- wherein powder B is a metal oxide or non-metal oxide powder consisting of aggregates of intergrown primary particles and displays a primary particle size of 5 to 50 nm and a BET surface area of 50 to 400 m²/g, and
- wherein at a given pH of the dispersion, powders A and B display the same surface charge sign, and wherein powders A and B have a zeta potential that gives rise to an electrostatic repulsion between the particles that is greater than the van der Waals attraction between the powders, and wherein in the dispersion the average particle diameter of the group A powder is 60 to 166 % of the aggregates of the group B powder and
- wherein the proportion of powder A, relative to the sum of powders A and B, is at least 5 wt.%.

The primary particles of these powders are understood to be the smallest particles in high-resolution TEM images, which are obviously unable to be broken down any further. Several primary particles can congregate at their points of contact to form aggregates. These aggregates are either impossible or very difficult to break down again using dispersing devices. Several aggregates can join together loosely to form agglomerates, a process that can be reversed again by suitable dispersion.

Average aggregate diameter is understood to refer to the equivalent sphere diameter, stated as the volume-weighted median value from peak analysis. For the powders used in the dispersion it is calculated by dynamic light scattering, for example with a Malvern Zetasizer 3000 HSa device. If the differences in aggregate diameters of powders A and B in a dispersion are between 60 and 166%, a monomodal distribution is measured with this method. This means that the average aggregate diameters of powders A and B are measured as being of the same size if their diameters differ by between 60% and 166%. If the average aggregate diameters of two powders in a dispersion differ by more than 60% or by more' than 166%, when measured separately, then the light scattering displays a bimodal distribution of the powder mixture. This distribution lies outside thy claimed range.

Stable is understood to mean that over a period of at least one month the dispersion does not settle out and forms no bottom products. This also means that the dispersion can be transported and does not have to be produced immediately before use.

Aqueous is understood to mean that the main component of the liquid phase is water.

In order to obtain a stable dispersion it is important that the particles present in the dispersion display the same surface charge sign. Particles having the same surface charge sign will repel one another. If the zeta potential is sufficiently high, the repulsive force can overcome the van der Waals attraction between the powder particles and coagulation or sedimentation of the particles is avoided. The zeta potential is a measure of the surface charge of the particles. It is the potential at the shear level within the electrochemical double layer of metal oxide and/or non-metal oxide particles and electrolyte in the dispersion. The zeta potential depends inter alia on the type of particle, for example silicon dioxide, cationised silicon dioxide or aluminium oxide. An important parameter in connection with the zeta potential is the isoelectric point (IEP) for a particle. The IEP indicates the pH at which the zeta potential is zero. In aluminium oxide or cationised silicon dioxide the IEP is at a pH of approximately 9 to 10, in silicon dioxide it is below pH 3.8.

The charge density at the surface can be influenced by changing the concentration of the potential-determining ions in the surrounding electrolyte. In those dispersions in which the particles carry acid or basic sites at the surface, the charge can be changed by adjusting the pH. The greater the difference between pH and IEP, the more stable the dispersion.

The zeta potential can be determined for example by measuring the colloid vibration current (CVI) of the dispersion or by determining the electrophoretic mobility.

In a preferred embodiment the average primary particle diameters of powders A and B can differ by a factor of at least 2, in a particular embodiment by a factor of at least 2.5.

In a particular embodiment the average aggregate diameter of powder B can be 80 to 125% of the size of powder A or vice versa. The aggregate diameter of powders A and B is particularly preferably of an approximately equal size.

The total solids content of the dispersion can be varied over broad limits. The solids content of powders A and B in the dispersion according to the invention can advantageously be between 20 and 80 wt.%.

In an advantageous embodiment the viscosity of the dispersion according to the invention can be below a value of 1500 mPas at a shear rate of 12 s⁻¹ and a temperature of 23°C. Values of below 1000 mPas at a shear rate of 12 s⁻¹ and a temperature of 23°C can be particularly preferred.

There is no restriction on the origin of the silicon dioxide of powder A. Thus ground silica gels, for example those sold by Grace under the name Sylojet® or Syloid®, can be used.

Pyrogenically produced silicon dioxide powder can preferably be used, however.

Pyrogenically within the meaning of the invention is understood to mean the oxidation of silicon, as described for example in CA2166844. Silicon dioxide powder of this type is sold for example by Elkem under the name Microsilica®.

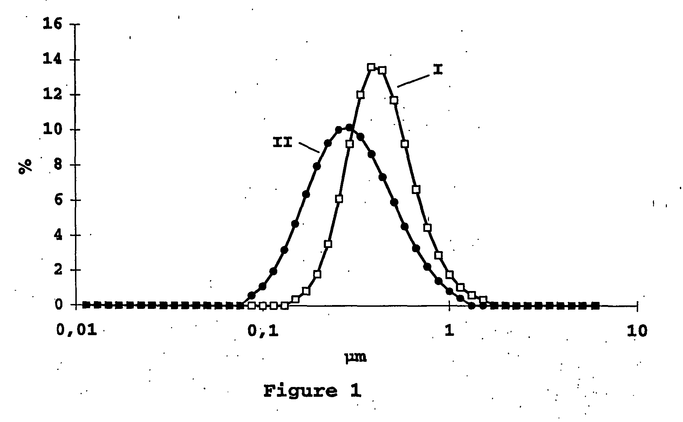

Pyrogenically within the meaning of the invention is also understood to mean the hydrolysis of silicon and aluminium compounds or silicon and titanium compounds in the gas phase in a flame generated by the reaction of hydrogen and oxygen. The pyrogenically produced silicon dioxide of powder A can particularly preferably display a BET surface area of 5 to 30 m²/g and a dispersion coefficient Z of less than 40, whereby Z = Y/2X, where X = median value of the particle size distribution, Y = range of the particle size distribution, relative to 10 to 90 % of the cumulative particle size. Powder A is produced as described in the Japanese laid-open specification JP2002-003213 of 09 January 2002. The powders described therein display particles having an almost perfectly spherical shape. Figure 1 shows the frequency of particles sizes (in %) of a powder having a specific surface area of 10 m²/g (I) and 30 m²/g (II) as a function of the particle size (in µm)

The average aggregate size of powder B can preferably assume values of between 50 and 500 nm.

Powder B of the invention comprises the metal and/or non-metal oxide powders silicon dioxide, aluminium oxide, titanium dioxide, cerium oxide and zirconium oxide. The surfaces of these powders display acid or basic sites. There is no restriction on the origin of the metal and non-metal oxides. Pyrogenically produced metal and non-metal oxides can preferably be used for the dispersion according to the invention. Pyrogenically produced silicon dioxide and aluminium oxide are particularly preferred. The BET surface area of the powders is between 5 and 600 m²/g.

In an advantageous further development of the invention, powder B can be a mixed oxide powder. Powders of at least two oxides from the group comprising silicon dioxide, aluminium oxide, titanium dioxide, cerium oxide or zirconium oxide can be used as mixed oxide powders.

Mixed oxide is understood to mean the intimate mixture of oxide powders at an atomic level to form mixed oxygen-metal/non-metal bonds, such as e.g. Si-O-Al or Si-O-Ti. In addition, the primary particles can also display regions in which the oxide powders are present side by side, for example regions of silicon dioxide adjacent to aluminium, oxide.

Pyrogenically produced mixed oxide powders can preferably be used. Here the precursors of mixed oxides, separately or together, are transferred to a burner and burnt in a flame and the resulting mixed oxide powders separated off. The production of these powders is described for example in EP-A-585 544, DE-A-199 19 635 (both SiO₂-Al₂O₃ mixed oxides) or DE-A-4235996 (SiO₂-TiO₂ mixed oxide).

The invention also comprises doped metal or non-metal oxides produced by the method described in DE-A-196 50 500. In particular the silicon-aluminium mixed oxide described in DE-A-198 47 161.

The invention also comprises powders having a metal or non-metal oxide as core, which is entirely or partially sheathed by a different metal or non-metal oxide. The sheath can be applied in a liquid medium or by means of a deposition process from a vaporous precursor of the metal or non-metal oxide.

Powders A and B can also be used in cationised form. This can be achieved by treating the powder with a cationic polymer that is soluble in the dispersion medium. A polymer having a weight-average molecular weight of below. 100,000 g/mol can preferably be used. The range between 2000 and 50,000 g/mol is particularly preferred.

Cationic polymers can be polymers having at least one quaternary ammonium group, phosphonium group, an acid adduct of a primary, secondary or tertiary amine group, polyethylene imines, polydiallyl amines or polyallyl amines, polyvinyl amines, dicyandiamide condensates, dicyandiamide-polyamine co-condensates or polyamide-formaldehyde condensates.

Those deriving from a diallyl ammonium compound can be preferable, particularly preferably those deriving from a dialkyl diallyl compound, which can be obtained by a radical cyclisation reaction of diallyl amine compounds and display the structure 1 or 2. Structures 3 and 4 represent copolymers deriving from dialkyl diallyl compounds.

R₁ and R₂ represent a hydrogen atom, an alkyl group having 1 to 4 C atoms, methyl, an ethyl, an n-propyl, an iso-propyl, an n-butyl, an iso-butyl or a tert.-butyl group, wherein R₁ and R₂ can be the same or different. A hydrogen atom from the alkyl group can also be substituted by a hydroxyl group. Y represents a radical-polymerisable monomer unit, such as e.g. sulfonyl, acrylamide, methacrylamide, acrylic acid, methacrylic acid. X⁻ represents an anion.

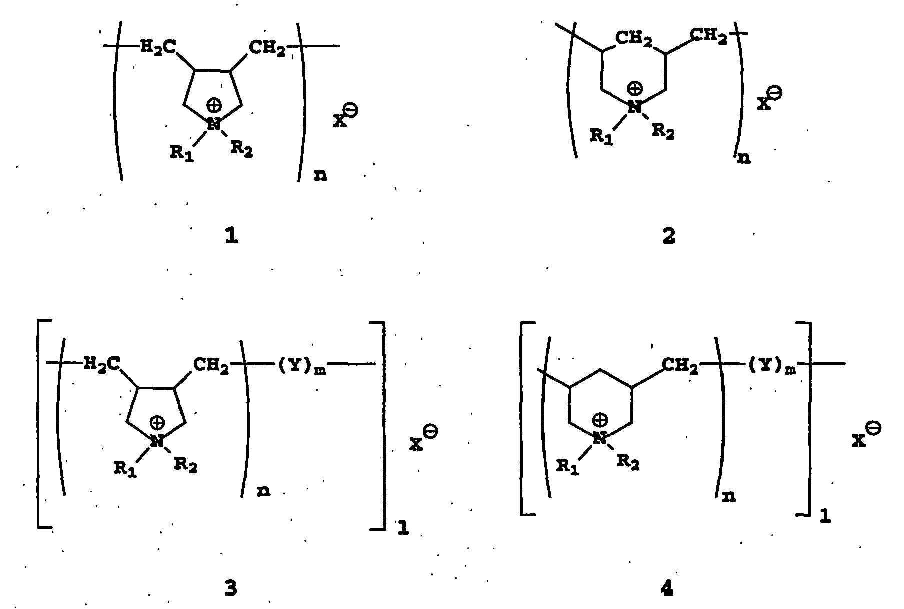

A poly(diallyl dimethyl ammonium chloride) solution (PDADMAC solution in water) can be cited by way of example.

The content of cationic polymer can be between 0.1 and 15, preferably between 0.5 and 10, particularly preferably between 0.8 and 5 wt.%, relative to the amount of cationic polymer and powder A and/or B.

The dispersion according to the invention can also contain substances to adjust the pH, such as acids, bases or buffer systems, additives to stabilise the dispersion, such as salts, surface-active substances, organic solvents, bactericides and/or fungicides.

The invention also provides a process for producing the dispersion according to the invention, which is characterised in that powders A and B are dispersed separately in an aqueous dispersion by means of a dispersing device and then combined, or that they are first physically mixed and then dispersed'together, or that they are introduced into the dispersing device in portions and then dispersed together. A predispersion can optionally take place prior to dispersion.

High-speed mixers or a toothed disc for example are suitable for predispersion. Rotor-stator machines, such as Ultra Turrax (IKA) or those manufactured by Ystral, as well as ball mills and attrition mills, are suitable for dispersion. Higher energy inputs are possible with a planetary kneader/mixer. The efficiency of this system depends on a sufficiently high viscosity of the mixture being processed, however, in order for the high shear energies needed to break down the particles to be introduced.

Aqueous dispersions having average aggregate diameters of below 100 nm can be obtained with high-pressure homogenisers. In these devices two predispersed streams of suspension under high pressure are decompressed through a nozzle. The two jets of dispersion hit each other exactly and the particles grind themselves. In another embodiment the predispersion is likewise placed under high pressure, but the particles collide against armoured sections of wall. The operation can be repeated any number of times to obtain smaller particle sizes.

The invention also provides a coating slip containing the dispersion according to the invention and at least one hydrophilic binder.

Polyvinyl alcohol, partially or entirely saponified, and cationised polyvinyl alcohol with a primary, secondary or tertiary amino group or a tertiary ammonium group on the main chain or on the side chain can be used as binder. Combinations of these polyvinyl alcohols with one another and polyvinyl pyrrolidones, polyvinyl acetate, silanised polyvinyl alcohols, styrene-acrylate latices, styrenebutadiene latices, melamine resins, ethylene-vinyl acetate copolymers, polyurethane resins, synthetic resins such as polymethyl methacrylates, polyester resins (for example unsaturated polyester resins), polyacrylates, modified starch, casein, gelatine and/or cellulose derivates (for example carboxymethyl cellulose) can also be used. Polyvinyl alcohol or cationised polyvinyl alcohol can preferably be used.

The coating slip can also additionally contain one or more other pigments such as calcium carbonates, phyllosilicates, aluminium silicates, plastics pigments (for example polystyrene, polyethylene, polypropylene), silicas (for example colloidal silicas, precipitated silica, silica gels, cationised modifications of the cited silica compounds, aluminium compounds (for example aluminium sols, colloidal aluminium oxides and hydroxyl compounds thereof, such as pseudoboehmites, boehmites, aluminium hydroxide), magnesium oxide, zinc oxide, zirconium oxide, magnesium carbonates, kaolin, clay, talc, calcium sulfate, zinc carbonate, satin white, lithopones, zeolites.

The coating slip can display a content of powder A and powder B of in total 10 to 60 wt.%. It can preferably be greater than 15 wt.%, particularly preferably greater than 25 wt.%.

The coating slip can also contain a proportion of binder, relative to the sum of powders A and B, of between 3 and 150 wt.%. It can preferably be between 10 and 40 wt.%, particularly preferably between 3 and 15 wt.%.

Crosslinking agents such as zirconium oxides, boric acid, melamine resins, glyoxal and isocyanates and other molecules which link together the molecule chains of the binder system can be used to increase the water resistance of the binder system and hence of the coating.

In addition, auxiliary substances such as optical brighteners, defoaming agents, wetting agents, pH buffers, UV absorbers and viscosity aids can be used.

The invention also provides the production of the coating slip, which is characterised in that the dispersion according to the invention is added with stirring to an aqueous solution of the hydrophilic binder, to which additional additives can optionally also be added, and optionally diluted until the desired ratio of powder and binder and the desired total solids content is established. The addition sequence is not substantial. Stirring is optionally continued for a defined period of time and deaeration is then performed in vacuo if required. Additives are understood to be e.g. pigment, crosslinking agents, optical brighteners, defoaming agents, wetting agents, pH buffers, UV absorbers and viscosity aids.

The invention also provides an ink-absorptive coating using the coating slip according to the invention and a support. Examples of supports that can be used are paper, coated paper, resin films, such as a polyester resin, including polyethylene terephthalate, polyethylene naphthalate, a diacetate resin, a triacetate resin, an acrylic resin, a polycarbonate resin, a polyvinyl chloride, a polyimide resin, cellophane, celluloid and a glass plate.

So-called photographic base papers, i.e. papers to which one/or more layers of polyethylene film have been applied to the front and or back, are preferred. Also polyester film, PVC film or precoated papers.

The absorptive medium according to the invention also includes media in which the ink-absorptive coating consists of several coating layers of the same type or other layers. The coating slip according to the invention can be found in just one or in several layers. Thus for example additional ink-absorptive coatings, such as films containing precipitated silica, can also be applied below the coating slip according to the invention. One or more polymer layers (for example polyethylene) can also be applied to the substrate and/or to the coating according to the invention, in order to increase the mechanical stability and/or the gloss in the coating (e.g. photographic base paper, lamination).

The supports can be transparent or opaque. There is no limit to the thickness of the support, but thicknesses of between 50 and 250 µm are preferably used.

The invention also provides the production of an absorptive medium which is characterised in that the coating slip is applied to the support and dried. The coating slip can be applied by all conventional application processes; such as roll coating, blade coating, airbrush, doctor blade (profiled, smooth, slotted), cast coating, film press, size press, curtain coating and slot die application (e.g. casting blade) and combinations thereof. Processes that allow a very homogeneous coating, such as e.g. cast coating, curtain coating and slot die application, are preferably used.

The coated substrate can be dried by all conventional methods, such as air or convection drying (e.g. hot air passage), contact or conduction drying, energy radiation drying (for example infrared and microwave).

It is surprising that the dispersions according to the invention display a high filler content with low viscosity and that the coating slips produced with them display a high gloss. In US 6,284,819 a coating slip is obtained from an aqueous dispersion containing two powder types of aggregates, the aggregate diameters of the first powder type being at least 50 % smaller than those of the second powder type. The aggregate diameters of the second powder type are preferably substantially even smaller, for example below 20 nm. The powder type with the larger aggregate diameters is intended to be responsible for the absorption of liquid, the smaller aggregate diameters of the second powder type are intended to fill voids. Overall the packing density of the coating is increased.

On the other hand, in the dispersion and coating slip according to the invention the differences in the aggregate diameters of the individual powder types, in contrast to US 6,284,819, must be no less than 60% of the larger aggregates. It is particularly preferable for the diameter of the aggregates to be the same.

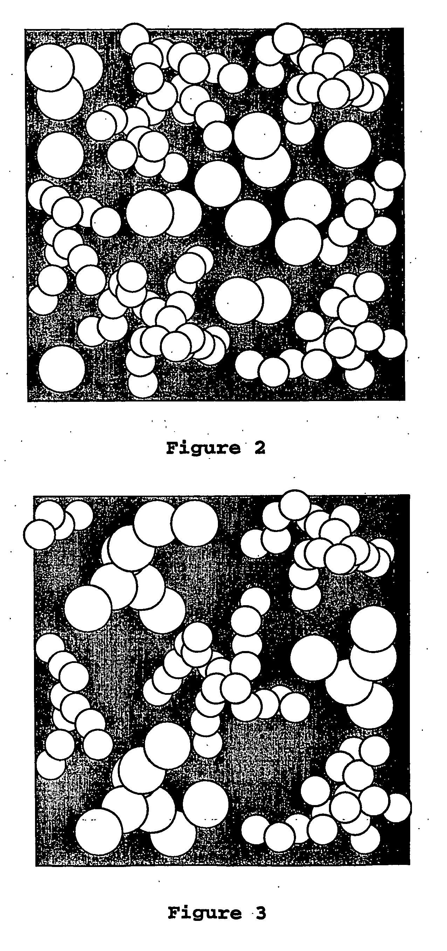

An explanation of the very good properties of the dispersion and coating slip according to the invention cannot be provided at present. Figures 2 and 3 provide a possible interpretation.

Figure 2 shows an arrangement of two aggregates having primary particles of different sizes in a dispersion. The aggregates with the lower BET surface area have a diameter that is half the size of that of the aggregates with the smaller BET surface area. Figure 2 corresponds to the facts described in US 6,284,819. Figure 2 clearly shows the high filler content of the dispersion, which has a negative influence on the pore volume, however, leading to poorer image properties.

Figure 3 shows the situation in the dispersion according to the invention with two types of aggregates, wherein both types have the same aggregate size albeit with different primary particle sizes. Large pores are formed with a high filler content.

### Examples

**Analytical methods:** The viscosity of the dispersions is determined with an MCR300 device with measuring system CC27 from Parr-Physica, witch measurements taken at shear rates of between 0.01 and 100 s⁻¹. The viscosity is given at 1 s⁻¹ and 100 s⁻¹ and at 23°C. The viscosity of the coating slips is measured with a Brookfield RVT rotary viscometer at 100 s⁻¹ and 23 °C .

The zeta potential is determined with a DT-1200 device from Dispersion Technology Inc. using the CVI method.

The aggregate size is determined by dynamic light scattering. The Zetasizer 3000 HSa device (Malvern Instruments, UK) was used. The volume-weighted median value from peak analysis is given.

The average primary particle sizes of the powders used are determined by transmission electron microscopy (TEM).

**Powders:** The pyrogenic silicon dioxide powders OX 10 (BET surface area approx. 10 m²/g) and OX 30 (BET surface area approx. 30 m²/g) from Nippon Aerosil are used as powder A.

The pyrogenic oxide powders DOX 110 (SiO₂ mixed oxide powder with 0.25 wt.% Al), AEROSIL® 200 and AEROSIL® 300 from Degussa AG are used as powder B.

**Dispersions:** Analytical data for the dispersions is set out in Table 2.

Demineralised water is used as the dispersion medium for the cited examples. The demineralised water is measured out and the additive optionally dissolved therein. Powder A and then powder B are then incorporated successively using a high-speed mixer. Dispersion is then performed for 30 min on an Ultra-Turrax at 7000 rpm. After approximately 24 h the samples are characterised for viscosity, particle size and zeta potential.

### Coating slips

**Formulation:** An aqueous polyvinyl alcohol solution (PVA Mowiol 40-88, Clariant) with a 12.33 % solids content is placed in a beaker and a quantity of water added such that after addition of the dispersion D2 a coating slip is obtained with the desired solids content. The particular dispersion is added to the combination of polyvinyl alcohol solution and water whilst stirring with a high-speed mixer disc at 500 revolutions per minute (rpm). Once the addition is completed stirring is continued for a further 30 minutes at 500 revolutions per minute. The coating slips are then deaerated with the aid of a desiccator and a water jet pump.

Coating slip S2-A contains 18 wt.% of dispersion D2, relative to the solids in the dispersion, and 22 parts of PVA Mowiol 40-88.

Coating slip S2-B contains 20 wt.% of dispersion D2, relative to the solids in the dispersion, and 6 parts of PVA Mowiol 40-88.

Index A refers to the coating of films, which is described below, index B to the coating of paper.

Coating slips S0_2-A and S0_2-B are produced in the same way from dispersion D0_2 according to the prior art.

The composition, viscosities and pH values of the coating slips are reproduced in Table 3.

### Ink-absorptive media

The coating slip S2-A is applied with the aid of wet film spiral blades onto an untreated polyester film (Benn) of thickness 100 micrometers. Drying is performed with a hairdryer. The rate of application obtained is 25 g/m².

The coated films are printed with an internal test image using an Epson Stylus Color 980 with the settings Photo Quality Glossy Film, 1440 dp, Epson calibration, gamma (D) : 1.8.

coating slip S2-B is applied with the aid of wet film spiral blades onto a matt inkjet paper (Zweckform, no. 2576). Drying is performed with a hairdryer. The coated paper is then satinised under 10 bar of pressure and at 50°C with the aid of a laboratory calender. The rate of application of the coating slips S2-B that is obtained is 13 g/m².

The coated papers are printed with an internal test image using an Epson Stylus Color 980 with the settings Premium Glossy Photo Paper, 1440 dpi, bidirectional, Epson calibration, gamma (D): 1.8.

The visual impression of gloss, adhesion and test image for the ink-absorptive media produced is reproduced in Table 4. The media according to the invention M2-A and M2-B display good values for gloss, adhesion and test print. The ink-absorptive media M0_2-A and M0_2-B produced from dispersions D0_2 display good to satisfactory values for gloss, adhesion and test print. In terms of the drying performance of the coating slips, the media M2-A and M2-B according to the invention are clearly superior to the media M0_2-A and M0_2-B according to the prior art.

**Table 1: Batch sizes for production of the dispersions**

| | | **Powder A** | | **Powder B** | | | |
|---|---|---|---|---|---|---|---|
| **Ex.** | **Demin. water** | **Type** | **Qty** | **Type** | **Qty** | **Additive (#)** | **Solids** |
| | g | | g | | g | g | wt.% |
| D0_1 | 1350 | OX30 | 150 | | | 0 | 15 |
| D0_2 | 1350 | | | AE200 | 150 | 0 | 15 |
| D1 | | OX30 | 150 | AE200 | 225 | 0 | 25 |
| D2 | 1010 | OX30 | 150 | AE200 | 300 | 40.3 | 30 |
| D3 | 1012 | OX10 | 150 | AE200 | 300 | 38.4 | 30 |
| D4 | 730 | OX10 | 150 | DOX110 | 600 | 20.3 | 50 |
| D5 | 1067 | OX30 | 75 | AE300 | 300 | 57.6 | 25 |

| | | | | | | | |
|---|---|---|---|---|---|---|---|
| (#) Additive: Polyquat 40U05NV from Katpol, Bitterfeld | | | | | | | |

**Table 2: Physical-chemical values for the dispersions**

| **Ex.** | **Av. aggregate size D₅₀** | **Av. BET surface area** | **Viscosity** | **Viscosity** | **pH** | **Zeta potential** |
|---|---|---|---|---|---|---|
| | nm | m²/g | 1/s⁻¹ | 100/s⁻¹ | | mV |
| D0_1 | 50 | 30 | n.d. | n.d. | 4.8 | n.d. |
| D0_2 | 245 | 200 | n.d. | n.d. | 4.3 | n.d. |
| D1 | 298 | 132 | 2450 | 878 | 4.4 | -3.5 |
| D2 | 173 | 143 | 340 | 120 | 2.9 | +36 |
| D3 | 165 | 137 | 235 | 87 | 2.9 | +37.5 |
| D4 | 98 | 54 | 385 | 277 | 2.8 | +34.2 |
| D5 | 168 | 246 | 412 | 257 | 2.8 | +38.2 |

| | | | | | | |
|---|---|---|---|---|---|---|
| n.d. not determined | | | | | | |

**Table 3: Batch sizes and physical-chemical values for the coating slips**

| **Coating slip** | **PVA content⁽¹⁾** | **Solids content** | **pH** | **Viscosity⁽²⁾** |
|---|---|---|---|---|
| | wt.% | wt.% | | mPas |
| S0_2-A | 36 | 13 | 4.7 | 724 |
| S0_2-B | 14 | 14 | 4.6 | 640 |
| S2-A | 22 | 18 | 3.4 | 554 |
| S2-B | 6 | 20 | 3.2 | 618 |

| | | | | |
|---|---|---|---|---|
| (1) Relative to 100 parts of solid in the dispersion (2) Viscosity according to Brookfield at 100 rpm in mPas | | | | |

**Table 4: Visual impression of gloss, adhesion and test image ⁽¹⁾ for the ink-absorptive media.**

| **Ink-absorptive medium** | **Gloss** | **Coating slip adhesion** | **Test print** | **Coating slip drying performance** |
|---|---|---|---|---|
| MO_2-A | + | 0 | +/0 | - |
| M0_2-B | +/0 | +/0 | +/0 | - |
| M2-A | + | + | + | +/0 |
| M2-B | +/0 | + | + | + |

| | | | | |
|---|---|---|---|---|
| (1) Each test impression assessed by 3 independent people: ++: very good, +: good, +/O: good to satisfactory, O: satisfactory; -: poor | | | | |

## Claims

1. Stable, aqueous dispersion containing powders A and B,
- wherein powder A is an amorphous silicon dioxide powder having an average particle diameter of 0.05 to 0.7 µm and a BET surface area of 5 to 50 m²/g, and
- wherein powder B is a metal oxide or non-metal oxide powder consisting of aggregates of intergrown primary particles and displays a primary particle size of 5 to 50 nm and a BET surface area of 50 to 400 m²/g, and
- wherein at a given pH of the dispersion, powders A and B display the same surface charge sign, and wherein powders A and B have a zeta potential that gives rise to an electrostatic repulsion between the particles that is greater than the van der Waals attraction between the powders, and wherein in the dispersion the average particle diameter of the group A powder is 60 to 166 % of the aggregates of the group B powder and
- wherein the proportion of powder A, relative to the sum of powders A and B, is at least 5 wt.%.

2. Dispersion according to claim 1, **characterised in that** the content of powders A and B in the dispersion is between 20 and 80 wt.%, relative to the total amount of dispersion.

3. Dispersion according to claims 1 or 2, **characterised in that** their viscosity does not exceed a value of 1500 mPas at a shear rate of 12 s⁻¹ and a temperature of 23°C.

4. Dispersion according to claims 1 to 3, **characterised in that** powder A is a pyrogenically produced silicon dioxide.

5. Dispersion according to claim 4, **characterised in that** powder A displays a BET surface area of 5 to 30 m²/g and a dispersion coefficient Z of less than 40, whereby Z = Y/2X, where X = median value of the particle size distribution, Y = range of the particle size distribution, relative to 10 to 90 % of the cumulative particle size.

6. Dispersion according to claims 1 to 5, **characterised in that** the average aggregate size of powder B is 50 to 500 nm.

7. Dispersion according to claim 6, **characterised in that** powder B is a pyrogenically produced silicon dioxide.

8. Dispersion according to claim 6, **characterised in that** powder B is a pyrogenically produced mixed oxide.

9. Dispersion according to claim 8, **characterised in that** the mixed oxide is a silicon-aluminium mixed oxide.

10. Dispersion according to claims 1 to 9, **characterised in that** powders A and B are used in cationised form.

11. Dispersion according to claims 1 to 10, **characterised in that** it contains substances to adjust the pH, such as acids, bases or buffer systems, additives to stabilise the dispersion, such as salts, surface-active substances, organic solvents, bactericides and/or fungicides.

12. Process for producing the dispersion according to claims 1 to 11, **characterised in that** powders A and B are dispersed separately in an aqueous dispersion by means of a dispersing device and then combined, or that they are first physically mixed and then dispersed together, or that they are introduced into the dispersing device in portions and then dispersed together.

13. Coating slip to form an ink-absorptive coating using the dispersion according to claims 1 to 11 and at least one hydrophilic binder.

14. Coating slip according to claim 13, **characterised in that** the content of powder is between 10 and 60 wt.%, preferably greater than 15 wt.%, particularly preferably greater than 25 wt.%.

15. Coating slip according to claims 13 or 14, **characterised in that** the proportion of binder relative to the powders is between 3 and 150 wt.%, preferably between 10 and 40 wt.%, particularly preferably between 3 and 15 wt.%.

16. Process for producing the coating slip according to claims 13 to 15, **characterised in that** the dispersion according to the invention is added with stirring to an aqueous solution of the hydrophilic binder, to which additional additives can optionally also be added, and optionally diluted until the desired ratio of powder and binder and the desired total solids content is established.

17. Absorptive medium using the coating slip according to claims 13 to 15 and a support.

18. Process for producing the absorptive medium according to claim 17, **characterised in that** the coating slip is applied to the support and dried.

## Patentansprüche

1. Stabile, wässerige Dispersion enthaltend Pulver A und B,
- wobei das Pulver A ein amorphes Siliciumdioxidpulver mit einem mittleren Partikeldurchmesser von 0,05 bis 0,7 µm und einer BET-Oberfläche von 5 bis 50 m²/g ist und
- wobei das Pulver B ein Metalloxid- oder Metalloidoxidpulver, welches aus Aggregaten von verwachsenen Primärpartikeln besteht, eine Primärpartikelgröße von 5 bis 50 nm, eine BET-Oberfläche von 50 bis 400 m²/g aufweist, und
- wobei die Pulver A und B bei gegebenem pH-Wert der Dispersion das gleiche Vorzeichen der Oberflächenladung aufweisen und wobei die Pulver A und B ein Zeta-Potential haben, das eine elektrostatische Abstoßung der Teilchen bewirkt, welche größer ist als die van-der-Waals-Anziehung der Pulver, und wobei sich in der Dispersion der mittlere Partikeldurchmesser des Pulvers der Gruppe A 60 bis 166 % der Aggregate des Pulvers der Gruppe B beträgt und
- wobei der Anteil des Pulvers A, bezogen auf die Summe von Pulver A und B, wenigstens 5 Gew.-% beträgt.

2. Dispersion nach Anspruch 1, **dadurch gekennzeichnet, dass** der Gehalt der Pulver A und B in der Dispersion zwischen 20 und 80 Gew.-%, bezogen auf die Gesamtmenge der Dispersion, beträgt.

3. Dispersion nach den Ansprüchen 1 oder 2, **dadurch gekennzeichnet, dass** deren Viskosität einen Wert von 1500 mPas bei einer Schergeschwindigkeit von 12 s⁻¹ und einer Temperatur von 23°C nicht überschreitet.

4. Dispersion nach den Ansprüchen 1 bis 3, **dadurch gekennzeichnet, dass** Pulver A ein pyrogen hergestelltes Siliciumdioxid ist.

5. Dispersion nach Anspruch 4, **dadurch gekennzeichnet, dass** Pulver A eine BET-Oberfläche von 5 bis 30 m²/g und einen Dispersionskoeffizienten Z von weniger als 40 aufweist, wobei Z = Y/2X, mit X = Medianwert der Partikelgrößenverteilung, Y = Spanne der Partikelgrößenverteilung, bezogen auf 10 bis 90 % der kumulativen Partikelgröße ist.

6. Dispersion nach den Ansprüchen 1 bis 5, **dadurch gekennzeichnet, dass** die mittlere Aggregatgröße des Pulvers B 50 bis 500 nm ist.

7. Dispersion nach Anspruch 6, **dadurch gekennzeichnet, dass** Pulver B ein pyrogen hergestelltes Siliciumdioxid ist.

8. Dispersion nach Anspruch 6, **dadurch gekennzeichnet, dass** das Pulver B ein pyrogen hergestelltes Mischoxid ist.

9. Dispersion nach Anspruch 8, **dadurch gekennzeichnet, dass** das Mischoxid ein Silicium-Aluminium-Mischoxid ist.

10. Dispersion nach den Ansprüchen 1 bis 9, **dadurch gekennzeichnet, dass** die Pulver A und B in kationisierter Form eingesetzt werden.

11. Dispersion nach den Ansprüchen 1 bis 10, **dadurch gekennzeichnet, dass** sie Substanzen zur pH-Wert-Einstellung, wie Säuren, Basen oder Puffersysteme, Additive zur Stabilisierung der Dispersion, wie Salze, oberflächenaktive Stoffe, organische Lösungsmittel, Bakterizide und/oder Fungizide enthält.

12. Verfahren zur Herstellung der Dispersion nach den Ansprüchen 1 bis 11, **dadurch gekennzeichnet, dass** die Pulver A und B mittels einer Dispergiervorrichtung in einer wässerigen Dispersion getrennt voneinander dispergiert werden und anschließend vereinigt werden, oder dass sie zunächst physikalisch vermischt und dann zusammen dispergiert werden, oder dass sie portionsweise in die Dispergiervorrichtung gegeben und dann zusammen dispergiert werden.

13. Streichfarbe zur Bildung einer Tintenaufnahmeschicht unter Verwendung der Dispersion gemäß den Ansprüchen 1 bis 11 und zumindest eines hydrophilen Bindemittels.

14. Streichfarbe nach Anspruch 13, **dadurch gekennzeichnet, dass** der Gehalt an Pulver zwischen 10 und 60 Gew.-% liegt, bevorzugt größer 15 Gew.-%, besonders bevorzugt größer 25 Gew.-% ist.

15. Streichfarbe nach den Ansprüchen 13 oder 14, **dadurch gekennzeichnet, dass** der Anteil an Bindemittel bezogen auf die Pulver zwischen 3 und 150 Gew.-%, bevorzugt zwischen 10 und 40 Gew.-%, besonders bevorzugt zwischen 3 und 15 Gew.-% liegt.

16. Verfahren zur Herstellung der Streichfarbe gemäß den Ansprüchen 13 bis 15, **dadurch gekennzeichnet, dass** man zu einer wässerigen Lösung des hydrophilen Bindemittels, der gegegebenenfalls noch weitere Additive zugesetzt sein können, unter Rühren die erfindungsgemäße Dispersion zugibt und gegebenenfalls verdünnt, bis sich das gewünschte Verhältnis von Pulver und Binder und der gewünschte Gesamtfeststoffgehalt einstellt.

17. Aufnahmemedium unter Verwendung der Streichfarbe gemäß den Ansprüchen 13 bis 15 und eines Trägers.

18. Verfahren zur Herstellung des Aufnahmemediums nach Anspruch 17, **dadurch gekennzeichnet, dass** die Streichfarbe auf den Träger aufgebracht und getrocknet wird.

## Revendications

1. Dispersion stable, aqueuse, contenant les poudres A et B,
- où la poudre A est une poudre de dioxyde de silicium amorphe présentant un diamètre moyen de particules de 0,05 à 0,7 µm et une surface BET de 5 à 50 m²/g ; et
- où la poudre B est une poudre d'oxyde de métal ou d'oxyde de non métal, constituée par des agrégats de particules primaires enchevêtrées et affiche une taille des particules primaires de 5 à 50 nm et une surface BET de 50 à 400 m²/g, et
- où, à un pH donné de la dispersion, les poudres A et B affichent le même signe de charge de la surface et où les poudres A et B présentent un potentiel zêta qui donne lieu à une répulsion électrostatique entre les particules qui est supérieure à l'attraction de van der Waals entre les poudres et où, dans la dispersion, le diamètre moyen des particules de la poudre du groupe A est de 60 à 166% de celui des agrégats de la poudre du groupe B et
- où la proportion de la poudre A, par rapport à la somme des poudres A et B, est d'au moins 5% en poids.

2. Dispersion selon la revendication 1, **caractérisée en ce que** la teneur des poudres A et B dans la dispersion est située entre 20 et 80% en poids, par rapport à la quantité totale de la dispersion.

3. Dispersion selon les revendications 1 ou 2, **caractérisée en ce que** sa viscosité ne dépasse pas une valeur de 1500 mPa.s à une vitesse de cisaillement de 12 s⁻¹ et une température de 23°C.

4. Dispersion selon les revendications 1 à 3, **caractérisée en ce que** la poudre A est du dioxyde de silicium produit par voie pyrogène.

5. Dispersion selon la revendication 4, **caractérisée en ce que** la poudre A affiche une surface BET de 5 à 30 m²/g et un coefficient de dispersion Z inférieur à 40, où Z = Y/2X, où X = valeur médiane de la distribution des tailles des particules, Y = plage de la distribution des tailles des particules par rapport à 10 jusqu'à 90% de la taille cumulée des particules.

6. Dispersion selon les revendications 1 à 5, **caractérisée en ce que** la taille moyenne des agrégats de la poudre B est de 50 à 500 nm.

7. Dispersion selon la revendication 6, **caractérisée en ce que** la poudre B est un dioxyde de silicium produit par voie pyrogène.

8. Dispersion selon la revendication 6, **caractérisée en ce que** la poudre B est un oxyde mixte produit par voie pyrogène.

9. Dispersion selon la revendication 8, **caractérisée en ce que** l'oxyde mixte est un oxyde mixte de silicium et d'aluminium.

10. Dispersion selon les revendications 1 à 9, **caractérisée en ce que** les poudres A et B sont utilisées sous forme cationisée.

11. Dispersion selon les revendications 1 à 10, **caractérisée en ce qu'**elle contient des substances pour ajuster le pH, telles que des acides, des bases ou des systèmes tampon, des additifs pour stabiliser la dispersion, tels que des sels, des substances tensioactives, des solvants organiques, des bactéricides et/ou des fongicides.

12. Procédé pour produire la dispersion selon les revendications 1 à 11, **caractérisé en ce que** le poudres A et B sont dispersées séparément dans une dispersion aqueuse au moyen d'un dispositif de dispersion puis sont combinées ou **en ce qu'**elle sont d'abord mélangées physiquement puis dispersées ensemble ou **en ce qu'**elles sont introduites dans le dispositif de dispersion en portions puis dispersées ensemble.

13. Masse de couchage pour former un revêtement absorbant l'encre utilisant la dispersion selon les revendications 1 à 11 et au moins un liant hydrophile.

14. Masse de couchage selon la revendication 13, **caractérisée en ce que** la teneur en poudre est située entre 10 et 60% en poids, de préférence supérieure à 15% en poids, de manière particulièrement préférée supérieure à 25% en poids.

15. Masse de couchage selon les revendications 13 ou 14, **caractérisée en ce que** la proportion de liant par rapport aux poudres est située entre 3 et 150% en poids, de préférence entre 10 et 40% en poids, de manière particulièrement préférée entre 3 et 15% en poids.

16. Procédé pour produire la masse de couchage selon les revendications 13 à 15, **caractérisé en ce que** la dispersion selon l'invention est ajoutée sous agitation à une solution aqueuse du liant hydrophile, à laquelle des additifs supplémentaires peuvent éventuellement également être ajoutés, et éventuellement diluée jusqu'à ce que le rapport de poudre à liant souhaité et la teneur en solides totale souhaitée soient atteints.

17. Milieu absorbant utilisant la masse de couchage selon les revendications 13 à 15 et un support.

18. Procédé pour produire le milieu absorbant selon la revendication 17, **caractérisé en ce que** la masse de couchage est appliquée sur le support et séchée.
